# EUROPÄISCHE PATENTSCHRIFT

(11) **EP 2 148 563 B1**
(45) Veröffentlichungstag und Bekanntmachung des Hinweises auf die Patenterteilung: **20.07.2011**
(21) Anmeldenummer: 07725435.7
(22) Anmeldetag: 22.05.2007
(51) Int. Cl.: A01J 5/01

(54) **VERFAHREN UND VORRICHTUNG ZUR MENGENBESTIMMUNG BEI DER ÜBERGABE EINER FLÜSSIGKEIT**
METHOD AND DEVICE FOR DETERMINING VOLUME DURING TRANSFER OF A LIQUID
PROCÉDÉ ET DISPOSITIF DE DÉTERMINATION DE QUANTITÉS LORS DU TRANSFERT D'UN LIQUIDE

(43) Veröffentlichungstag der Anmeldung: 03.02.2010
(73) Patentinhaber: BARTEC BENKE GmbH, 21465 Reinbek/Hamburg (DE)
(72) Erfinder: BÖHM, Alfred, 94234 Viechtach (DE); BINDER, Wilhelm, 94113 Tiefenbach (DE); LERACH, Dieter, 94227 Zwiesel (DE)
(74) Vertreter: Heim, Hans-Karl
(86) Internationale Anmeldenummer: PCT/EP2007/004535
(87) Internationale Veröffentlichungsnummer: WO 2008/141664

(56) Entgegenhaltungen:
- WO-A-02/103324
- DE-U1- 29 623 713
- GB-A- 2 240 764
- GB-A- 2 327 219

## Beschreibung

Die Erfindung betrifft ein Verfahren zur Mengenbestimmung bei der Übergabe einer Flüssigkeit, insbesondere von Milch, gemäß dem Oberbegriff des Anspruchs 1. Bei einem derartigen Verfahren ist vorgesehen, dass die Flüssigkeit an einer Zulauföffnung in eine Messleitung eingeleitet wird und an einer Auslauföffnung aus der Messleitung ausgeleitet wird, und eine durch die Messleitung strömende Flüssigkeitsmenge mittels einer der Messleitung zugeordneten Durchflussmesseinrichtung bestimmt wird.

Die Erfindung betrifft ferner eine Vorrichtung zur Mengenbestimmung bei der Übergabe einer Flüssigkeit, insbesondere zum Durchführen des erfindungsgemäßen Verfahrens, gemäß dem Oberbegriff des Anspruchs 13, mit einer Messleitung, die an ihrem einen Ende eine Zulauföffnung und an ihrem anderen Ende eine Auslauföffnung für die Flüssigkeit aufweist, und einer der Messleitung zugeordneten Durchflussmesseinrichtung zum Messen einer durch die Messleitung strömenden Flüssigkeitsmenge.

Ein gattungsgemäßes Verfahren und eine gattungsgemäße Vorrichtung sind beispielsweise aus der EP 0 855 576 A1 bekannt. Diese Druckschrift lehrt, in der Abgabeleitung eines Tanks einen Durchflusszähler zur Mengenbestimmung vorzusehen. Um Verfälschungen des Messergebnisses des Zählers entgegenzuwirken, die durch Gaseinschlüsse entstehen könnten, welche unter Umständen im Flüssigkeitsstrom enthalten sind, ist nach der EP 0 855 576 A1 in der Abgabeleitung oberstromig des Zählers ein Entgasungsbehälter vorgesehen, der auch als Gasabscheider bezeichnet werden kann. Der Gasabscheider dient dazu, gegebenenfalls vorhandene Gasanteile aus der Strömung vor Erreichen des Zählers abzutrennen und in den Tank zurückzuführen.

Ein solcher Gasabscheider zur Verwendung in einer Milchsammelanlage ist beispielsweise aus der DE 296 23 713 U1 bekannt. Um bei Verwendung dieses bekannten Gasabscheiders Milch über eine Saugleitung ansaugen zu können, ist nach der DE 296 23 713 U1 am Gasabscheider eine Vakuumpumpe vorgesehen, mit welcher der Gasabscheidungsbehälter unter Unterdruck gesetzt werden kann, so dass Milch über die Saugleitung in den Behälter eingesaugt wird. Zwischen der Vakuumpumpe und dem Gasabscheider ist nach der DE 296 23 713 U1 ein Schaumsammelbehälter vorgesehen, der verhindern soll, dass Schaum, der beim Ansaugen von Milch entsteht, zur Vakuumpumpe gelangt und deren Funktion unter Umständen beeinträchtigt.

Die aus dem Stand der Technik bekannten Gasabscheider haben jedoch ein relativ großes Volumen, welches durch die Durchflussmenge pro Zeiteinheit, also die Annahmeleistung, bestimmt wird. Insbesondere steigt mit steigender Annahmeleistung das erforderliche Gasabscheidervolumen. Somit muss in der Praxis entweder die Annahmeleistung begrenzt werden oder ein vergleichsweise schwerer und voluminöser Luftabscheider gewählt werden, was insbesondere bei Tankfahrzeugen unerwünscht ist.

Es ist daher ein Messverfahren entwickelt worden, bei dem eine Flüssigkeitsmengenbestimmung mit verringertem Luftabscheidervolumen möglich ist. So ist aus der DE 197 10 296 C1 ein Verfahren bekannt, bei dem nur ein Teil der Milchströmung entgast wird. Der verbleibende Hauptstrom wird hingegen nicht entgast. In den beiden Strömen wird jeweils eine Ultraschallmessung durchgeführt, mittels der auf die Gasbeladung und somit auf den Milchvolumenstrom rückgeschlossen werden kann.

Aus der DE 10 2005 005 295 A1 ist ein Verfahren zur Fördermengenerfassung bekannt, bei dem Gasanteile nicht abgeschieden sondern mittels einer Füllgradmesseinrichtung erfasst werden und bei der Fördermengenbestimmung mit eingerechnet werden. Dieses Verfahren stellt jedoch vergleichsweise hohe Anforderungen an die Genauigkeit-der Füllgradmesseinrichtung.

Die GB 2240 764 offenbart die Mermale des Oberbegriffs der Ansprüche 1 und 13.

Aufgabe der Erfindung ist es, eine Vorrichtung und ein Verfahren zur Mengenbestimmung anzugeben, die bei einem besonders kompakten Anlagenaufbau und hohen Förderraten durch die Messleitung eine zuverlässige und genaue Mengenbestimmung zulassen.

Die Aufgabe wird erfindungsgemäß durch ein Verfahren mit den Merkmalen des Anspruchs 1 und eine Vorrichtung mit den Merkmalen des Anspruchs 13 gelöst. Bevorzugte Ausführungsbeispiele sind in den jeweils abhängigen Ansprüchen angegeben.

Das erfindungsgemäße Verfahren ist dadurch gekennzeichnet, dass in der Messleitung befindliche Flüssigkeit diskontinuierlich einer Entgasungsanordnung zugeführt wird.

Der Erfindung liegt die Erkenntnis zugrunde, dass signifikante Gaseinschlüsse bei der Übergabe einer Flüssigkeit häufig lediglich zeitweise auftreten, und zwar insbesondere zu Beginn des Übergabevorganges, aufgrund des noch unvollständigen Ansaugvorganges, und/oder zum Ende des Übergabevorganges, aufgrund des Leersaugens des Schlauchsystems. Daneben können auch außerordentliche Gasströme auftreten, die beispielsweise durch undichte Kupplungen, defekte Schläuche oder bewusste Manipulation generiert werden.

Vor allem bei größeren Übergabemengen, bei denen die Start- und Abschlussvorgänge in den Hintergrund treten, liegen somit während der längsten Zeit des Übergabevorganges häufig keine nennenswerten Gaseinschlüsse vor. Während der überwiegenden Zeit des Übergabevorganges ist folglich in Ermangelung nennenswerter Gaseinschlüsse keine Gasabscheidung erforderlich.

Dem trägt die Erfindung dadurch Rechnung, dass beim Normalbetrieb, wenn also keine nennenswerte Gasbelastung vorliegt, die Flüssigkeitsströmung an der Entgasungsan-ordnung vorbei geleitet wird. Da nach der Erfindung in diesem Stadium die Flüssigkeit die Entgasungsanordnung nicht durchlaufen muss, limitiert die Entgasungsanordnung in diesem Stadium die Fördergeschwindigkeit nicht. Somit können besonders hohe Förderraten erzielt werden. Darüber hinaus kann die Entgasungsanordnung auch besonders einfach und kompakt aufgebaut werden, da sie vom Großteil des geförderten Gesamtvolumens der Flüssigkeit in der Regel nicht betroffen ist.

Lediglich dann, wenn nennenswerte Gasanteile in der Flüssigkeit auftreten, also beispielsweise zum Beginn der Übergabe, zum Ende der Übergabe und beim Auftreten von Störungszuständen, wird nach der Erfindung Flüssigkeit, die den Querschnitt der Messleitung durchströmt, der Entgasungsanordnung zugeführt und somit eine gezielte Entgasung durchgeführt. Nach der Erfindung wird somit die Entgasung nur zeitweise, das heißt sporadisch, durchgeführt. Folglich wird nur ein zeitlicher Bruchteil der durch die Messleitung strömenden Flüssigkeit einer Entgasung unterzogen.

Somit ermöglicht es die Erfindung, die regelmäßig zum Beginn und/oder zum Ende der Übergabe auftretenden Gaseinschlüsse, aber auch außerordentliche Gasströme, die beispielsweise durch undichte Kupplungen, defekte Schläuche oder bewusste Manipulation generiert werden, zu berücksichtigen und trotz dieser punktuellen Gasströme eine korrekte Mengenbestimmung zu gewährleisten. Andererseits werden nach der Erfindung besonders hohe Förderraten erreicht, da im Normalbetrieb die Entgasungsanordnung umgangen wird.

Bei der Flüssigkeit kann es sich insbesondere um Milch handeln und bei dem Gas, zu dessen Abtrennung die Entgasungsanordnung vorgesehen ist, um Luft. Besonders geeignet ist die Erfindung für die Annahme einer Flüssigkeit, insbesondere in einem Tankfahrzeug. Die Erfindung kann aber auch bei der Flüssigkeitsabgabe zum Einsatz kommen. Die Durchflussmesseinrichtung, die beispielsweise ein Turbinenzähler oder eine magnetoinduktive Messvorrichtung sein kann, ist vorzugsweise an der Messleitung angeordnet. Die Entgasungsanordnung kann insbesondere als Beruhigungsbecken ausgebildet sein.

Geeigneterweise wird durch die Messleitung strömende Flüssigkeit bei Eintritt einer vorher bestimmten Bedingung der Entgasungsanordnung zugeführt. Hierbei kann es sich beispielsweise um eine zeitliche Bedingung handeln, die insbesondere auf den Anfang und/oder auf das Ende des Übergabevorganges schließen lässt. Beispielsweise kann vorgesehen sein, dass in der Messleitung befindliche Flüssigkeit zumindest zu Beginn und/oder zum Ende der Übergabe der Entgasungsanordnung zugeführt wird. Bei der Bedingung kann es sich aber auch um das Überschreiten eines vorher bestimmten Gasanteiles in der Flüssigkeit handeln, wodurch eine Entfernung auch von außerordentlichen Gasströmen möglich wird. Alternativ oder zusätzlich kann somit vorgesehen sein, dass der Gasanteil der in der Messleitung befindlichen Flüssigkeit gemessen wird und dass in der Messleitung befindliche Flüssigkeit bei Überschreiten eines vorher bestimmten Wertes für den Gasanteil der Entgasungsanordnung zugeführt wird.

Eine besonders bevorzugte Ausführungsform der Erfindung besteht darin, dass zwischen der Zulauföffnung und der Durchflussmesseinrichtung ein Flüssigkeitsvolumen aus der Messleitung entnommen wird und zum Entgasen in einen Zwischenspeicher überführt wird, der zwischen der Zulauföffnung und der Durchflussmesseinrichtung, insbesondere in einem Rohrleitungsbereich der Messleitung, von der Messleitung abzweigt, und dass das entnommene Flüssigkeitsvolumen anschließend wieder aus dem Zwischenspeicher, insbesondere zwischen der Zulauföffnung und der Durchflussmesseinrichtung, in die Messleitung zurückgeführt wird. Hierin kann ein eigenständiger Erfindungsaspekt gesehen werden. -

Gemäß dieser Ausführungsform wird eine Abtrennung von Gasanteilen nicht wie aus dem Stand der Technik bekannt durch einen direkt im Leitungsverlauf der Messleitung angeordneten Gasabscheider vorgenommen. Vielmehr ist die Entgasungsanordnung, die durch den Zwischenspeicher gebildet wird, außerhalb des Leitungsverlaufes der Messleitung an einer Abzweigung der Messleitung vorgesehen. Entsprechend dieser Ausführungsform wird das zu entgasende Volumen vor seiner Durchflussmessung in einen von der Messleitung abzweigenden Zwischenspeicher übernommen, dort entgast und nach der Entgasung zur Durchflussmessung wieder in die Messleitung zurückgeführt. Vorzugsweise erfolgt die Rückführung an demselben Ort, an dem das Flüssigkeitsvolumen entnommen wurde. Die Rückführung kann aber auch an einem unterschiedlichen Ort erfolgen. Geeigneterweise zweigt der Zwischenbehälter in einem Rohrleitungsbereich der Messleitung von dieser ab, worunter jeder Leitungsbereich verstanden werden kann, an dem kein Gasabscheider angeordnet ist.

Besonders vorteilhaft ist es, dass der Zwischenspeicher eine Speicherleitung aufweist, die insbesondere als Rohrleitung ausgebildet sein kann. Eine solche Speicherleitung ist in der Herstellung besonders günstig. Außerdem kann eine Speicherteitung in einer besonders einfachen Weise an einer Messanlage, insbesondere an einem Milchsammelwagen, untergebracht werden.

Insbesondere um die Entgasung größerer Volumina zu ermöglichen, ist es vorteilhaft, dass an der Speicherleitung ein Speicherbehälter vorgesehen ist.

Zum Überführen des Flüssigkeitsvolumens aus der Messleitung in den Zwischenspeicher kann beispielsweise vorgesehen sein, eine an der Messleitung vorgesehene Pumpeinrichtung zu betätigen und hierbei einen Überdruck bezüglich des Zwischenspeichers zu erzeugen. Hinsichtlich der Verfahrensgeschwindigkeit ist es jedoch besonders vorteilhaft, dass zum Entnehmen des Flüssigkeitsvolumens aus der Messleitung am Zwischenspeicher ein Unterdruck erzeugt wird. Hierzu können beispielsweise ein Ejektor, eine Wasserringpumpe und/oder eine Membranpumpe vorgesehen sein. Wird das Volumen mit einem Ejektor erzeugt, so benötigt dieser in der Regel kein großes Volumen. Die Ejektor-Drucklufteinrichtung kann, sofern aufgrund der Umgebungstemperatur erforderlich, beheizt werden.

Zum Zurückführen des Flüssigkeitsvolumens in die Messleitung kann beispielsweise vorgesehen sein, dass ein Gas in den Zwischenspeicher eingeleitet wird. Hierdurch kann eine besonders vollständige Entleerung des Speichers erfolgen.

Alternativ oder zusätzlich kann vorgesehen sein, dass zum Zurückführen des Flüssigkeitsvolumens in die Messleitung eine an der Messleitung angeordnete Pumpe betätigt wird. In diesem Fall ist ein Zurückführen bei besonders geringem apparativen Aufwand möglich.

Besonders zweckmäßig ist es ferner, dass der Zwischenspeicher mittels eines am Zwischenspeicher angeordneten Ventils abgesperrt wird, wenn der Füllstand in dem Zwischenspeicher beim Zurückführen des Flüssigkeitsvolumens einen bestimmten Wert unterschreitet. Hierdurch kann verhindert werden, dass beim Zurückführen der Flüssigkeit in die Messleitung Gas aus dem Zwischenspeicher in die Messleitung mitgeführt wird.

Eine weitere bevorzugte Ausführungsform der Erfindung besteht darin, dass beim Entnehmen des Flüssigkeitsvolumens aus der Messleitung eine Fluidverbindung zwischen dem Zwischenspeicher und der Durchflussmesseinrichtung gesperrt wird. Gemäß dieser Ausführungsform kann verhindert werden, dass beim Entnehmen von Flüssigkeit aus der Messleitung zum Entgasen Flüssigkeit aus dem Bereich der Durchflussmesseinrichtung entnommen wird, was unter Umständen zu Fehlmessungen führen könnte.

Weiterhin ist es besonders vorteilhaft, dass beim Zurückführen des Flüssigkeitsvolumens in die Messleitung eine Fluidverbindung zwischen der Zulauföffnung und dem Zwischenspeicher gesperrt wird. Hierdurch wird eine besonders gute Förderleistung erhalten.

Ferner ist es zweckmäßig, dass beim Zurückführen des Flüssigkeitsvolumens in die Messleitung ein Strömungsquerschnitt der Messleitung, insbesondere durch ein unterstromig der Durchflussmesseinrichtung angeordnetes Ventil, reduziert wird. Hierdurch wird ein zusätzlicher Strömungswiderstand geschaffen, der die Strömungsgeschwindigkeit beim Zurückführen des Flüssigkeitsvolumens reduziert. Da das zum Entgasen in den Zwischenspeicher entnommene Flüssigkeitsvolumen in der Regel vergleichsweise klein ist, wird hierdurch verhindert, dass eine zu schnelle und gegebenenfalls unkontrollierte Entleerung des Speichers stattfindet, die mit einer Eintragung von Gasanteilen aus dem Zwischenspeicher in die Messleitung einher gehen könnte. Überdies wird aufgrund der mit dem Strömungswiderstand einhergehenden Druckerhöhung das Volumen eventuell vorhandener Gasblasen reduziert.

Eine weitere bevorzugte Ausführungsform der Erfindung besteht darin, dass in der Messleitung ein Druck gemessen wird und dass die an der Messleitung angeordnete Pumpe in Abhängigkeit des gemessenen Drucks gesteuert wird. Bei dem Druck handelt es sich geeigneterweise um einen Saugdruck, der oberstromig der Pumpe gemessen wird. Insbesondere kann die Pumpe derart gesteuert werden, dass der Saugdruck auf einen Wert geregelt wird, bei dem Kavitation der Flüssigkeit unterbunden ist. Gemäß diesem Ausführungsbeispiel kann sich das Pumpensystem selbst adaptieren, so dass seine Förderleistung zuverlässig unter der Kavitationsgrenze bleibt. Da nach der Erfindung im Verlauf der Messleitung kein Luftabscheider, der Druckabfälle mit sich bringen könnte, erforderlich ist, kann nach der Erfindung der Druck an der Zulauföffnung, das heißt am Systemeingang, in besonders einfacher Weise gesteuert, insbesondere geregelt, werden.

Zur weiteren Steigerung der Messgenauigkeit ist es vorteilhaft, dass ein Gasanteil der in der Messleitung befindlichen Flüssigkeit ermittelt wird und dass der gemessene Gasanteil zur Kompensation von Messwerten der Durchflussmesseinrichtung herangezogen wird. Diese Ausführungsform ermöglicht es, Restgasmengen, die unter Umständen trotz Entgasungsmaßnahmen auftreten, messtechnisch zu erfassen und bei der Flüssigkeitsmengenbestimmung zu berücksichtigen. Ferner ermöglicht es diese Ausführungs-form, Gasanteile unterhalb eines Schwellenwertes zu tolerieren, bevor ein Entgasungs-vorgang gestartet werden muss.

Im Hinblick auf die Fördergeschwindigkeit und die Zuverlässigkeit des erfindungsgemäßen Verfahrens ist es weiterhin vorteilhaft, dass ein Gasanteil der in der Messleitung befindlichen Flüssigkeit ermittelt wird und dass die an der Messleitung angeordnete Pumpe in Abhängigkeit des gemessenen Gasanteils gesteuert, insbesondere geregelt, wird. Hierdurch kann verhindert werden, dass aufgrund einer zu hohen Pumpleistung, insbesondere zum Ende der Übergabe, verfrüht ein übermäßiger Gasanteil in die Messleitung eingesaugt wird. Hierdurch wiederum kann der Zeitpunkt, zu dem eine Entgasung durch Überführen von Flüssigkeit in den Zwischenspeicher erforderlich ist, herausgezögert werden und somit das bei der Entgasung involvierte Flüssigkeitsvolumen verringert werden.

Zur Messung des Gasanteils in der Messleitung ist geeigneterweise ein Füllgradsensor vorgesehen, der auch als Bubble-Sensor bezeichnet werden kann.

Die erfindungsgemäße Vorrichtung ist vorzugsweise zur Durchführung des erfindungsgemäßen Verfahrens eingerichtet, wodurch sich die in diesem Zusammenhang erläuterten Vorteile erzielen lassen. Nach der Erfindung können die im Zusammenhang mit dem Verfahren erläuterten Merkmale auch im Zusammenhang mit der Vorrichtung Verwendung finden. Gleichfalls können die im Zusammenhang mit der Vorrichtung erläuterten Merkmale beim Verfahren Verwendung finden.

Eine gattungsgemäße Vorrichtung, die eine der Messleitung zugeordnete Entgasungseinrichtung für die Flüssigkeit aufweist, kann nach der Erfindung auch dadurch weitergebildet sein, dass Mittel vorgesehen sind, mit denen ein Flüssigkeitsaustausch zwischen der Entgasungseinrichtung und der Messleitung absperrbar ist. Dies ermöglicht es, einen Flüssigkeitsaustausch zwischen der Messleitung und der Entgasungseinrichtung nur zeitweise zuzulassen und somit eine zeitweise, diskontinuierliche Entgasung der die Messleitung durchlaufenden Flüssigkeit vorzunehmen.

Insbesondere ist eine erfindungsgemäße Vorrichtung dadurch gekennzeichnet, dass ein Zwischenspeicher vorgesehen ist, der zwischen der Zulauföffnung und der Durchflussmesseinrichtung, insbesondere in einem Rohrleitungsbereich der Messleitung, von der Messleitung abzweigt, und dass eine Einrichtung zum Erzeugen eines Unterdruckes in dem Zwischenspeicher vorgesehen ist, mittels dem ein Flüssigkeitsvolumen aus der Messleitung in den Zwischenspeicher überführbar ist.

Eine besonders einfache Rückführung der Flüssigkeit zurück in die Messleitung wird erfindungsgemäß dadurch ermöglicht, dass am Zwischenspeicher eine Belüftungseinrichtung vorgesehen ist, mittels der zum Zurückführen des Flüssigkeitsvolumens aus dem Zwischenspeicher in die Messleitung ein Gas in den Zwischenspeicher einleitbar ist. Bei dem Gas kann es sich insbesondere um Luft handeln.

Im Hinblick auf die Apparatekosten ist es besonders vorteilhaft, dass der Zwischenspeicher eine Speicherleitung aufweist, die in besonders einfacher Weise hergestellt werden kann. Zur Volumenvergrößerung ist an der Speicherleitung vorzugsweise ein Speicherbehälter vorgesehen.

Eine weitere bevorzugte Ausführungsform der Erfindung, die eine Zeitersparnis bei der Übergabe mit sich bringen kann, besteht darin, dass entlang dem Zwischenspeicher mehrere Belüftungseinrichtungen angeordnet sind und dass an dem Zwischenspeicher zwischen den einzelnen Belüftungseinrichtungen jeweils ein Absperrventil angeordnet ist. Dies ermöglicht es, den Zwischenspeicher etappenweise zu entleeren. Sobald der Füllstand ein Absperrventil erreicht, kann dieses geschlossen werden, und der verbleibende Zwischenspeicherbereich durch Betätigung der nächsten der Messleitung zugewandten Belüftungseinrichtung entleert werden. Der rückwärtige Bereich des Absperrventils kann dabei bereits wieder evakuiert werden, so dass besonders rasch ein hinreichender Unterdruck zum Zuführen eines weiteren Flüssigkeitsvolumens in den Zwischenspeicher zur Verfügung steht.

Die Zuverlässigkeit der erfindungsgemäßen Vorrichtung kann weiter dadurch verbessert werden, dass an dem Zwischenspeicher, insbesondere am Speicherbehälter, zumindest ein Füllstandssensor vorgesehen ist. Hierdurch wird eine Überwachung des fluid-übergabevorganges im Zwischenspeicher möglich.

Sofern ein Füllstandssensor am Zwischenspeicher vorgesehen ist, ist es besonders vorteilhaft, dass zwischen der Einrichtung zum Erzeugen des Unterdruckes und der Sammelleitung ein Ventil, insbesondere Absperrventil, vorgesehen ist, das in Abhängigkeit des vom Füllstandssensor ermittelten Füllstandes betätigbar ist. Bei einer derartigen Anordnung kann verhindert werden, dass bei einem übermäßigen Ansteigen des Füllstands im Zwischenspeicher Flüssigkeit zur Einrichtung zum Erzeugen des Unterdrucks gelangt und deren Funktionsfähigkeit beeinträchtigen kann. Für besonders hohe Förderraten ist es vorteilhaft, dass an der Messleitung eine Pumpe vorgesehen ist. Geeigneterweise ist diese Pumpe zwischen der Abzweigung des Zwischenspeichers und der Auslauföffnung in der Messleitung angeordnet. In diesem Falle erlaubt die Pumpe sowohl eine Förderung der Flüssigkeit im Normalbetrieb als auch ein Entleeren des Zwischenspeichers nach dem Entgasen.

Besonders vorteilhaft ist es, dass an der Pumpe eine Entlüftungsleitung vorgesehen ist, die vorzugsweise in den Zwischenspeicher einmündet. Dies ermöglicht es, Gasanteile abzuführen, die sich unter Umständen im oberen Bereich der Pumpe ansammeln können und die Pumpleistung beeinflussen können, die Messgenauigkeit beeinflussen können und unter Umständen zu Kavitation führen können, welche der Qualität von geförderter Milch abträglich sein kann.

Ferner ist es nach der Erfindung zweckmäßig, dass die Höhe der Messleitung im Bereich zwischen der Zulauföffnung und dem Zwischenspeicher zumindest bereichsweise zum Zwischenspeicher hin abnimmt. Hierdurch kann ein besonders effizientes Entleeren des eingangsseitigen Leitungssystems zum Ende der Abgabe erreicht werden, da eingangsseitig vorhandene Restflüssigkeit von selbst aufgrund Gravitationswirkung zum Zwischenspeicher hin strömt. Ferner kann eine automatische Entgasungsfunktion zur Verfügung gestellt werden, bei der Gasanteile zur Zulauföffnung hin zurückströmen.

Weiterhin ist es nach der Erfindung vorteilhaft, dass an der Messleitung im Bereich der Auslauföffnung ein Tank angeordnet ist und/oder dass an der Messleitung im Bereich der Zulauföffnung eine Anschlusseinrichtung für einen Ansaugschlauch angeordnet ist. Insbesondere kann die Vorrichtung mitsamt dem Tank auf einem Tankfahrzeug angeordnet sein. Der Ansaugschlauch kann geeigneterweise zur Entleerung von Milchbehältnissen vorgesehen sein.

Weiterhin ist es zweckmäßig, dass die Messleitung auf der der Zulauföffnung abgewandten Seite des Zwischenspeichers U-förmig, insbesondere doppelt U-förmig ausgebildet ist. Die U-Form ist dabei geeigneterweise in zumindest einer vertikal verlaufenden Ebene ausgebildet. Vorzugsweise ist die Pumpe im Bereich eines Scheitels der U-Form angeordnet. Der Scheitel der U-förmigen Struktur ist zweckmäßigerweise unterhalb der Abzweigung des Zwischenspeichers angeordnet. Hierdurch kann auch unterstromig des Zwischenspeichers eine automatische Entlüftungsfunktion zur Verfügung gestellt werden, bei dem Gasanteile von selbst aufgrund ihres Auftriebs in den Zwischenspeicher strömen.

Eine besonders bevorzugte Weiterbildung der erfindungsgemäßen Vorrichtung besteht ferner darin, dass eine Steuereinrichtung vorgesehen ist, die zur Durchführung des Verfahrens nach einem der vorstehenden Ansprüche eingerichtet ist.

Mit der erfindungsgemäßen Vorrichtung kann eine Messanlage für Milchsammelwagen geschaffen werden, deren Annahmeleistung häufig nur durch die örtlichen Gegebenheiten begrenzt ist. Durch den Wegfall eines Gasabscheiders kann direkt auf den Unterdruck am Systemeingang geregelt werde, wodurch sich das Pumpsystem selbst adaptieren und in seiner Förderleistung immer sicher unterhalb der Kavitationsgrenze bleiben kann.

Der am Zwischenspeicher ausgebildete Vakuurnvorratsbehälter ermöglicht zum Schluss der Annahme ein besonders effizientes Leersaugen des Lieferantentanks und des Annahmeschlauches.

Es hat sich gezeigt, dass mit der erfindungsgemäßen Anlage aus einem 4,5 m tief liegenden Annahmetank Milch abgesaugt werden kann, wobei die im Schlauch verbleibende Restmenge nicht größer ist als bei einer ebenerdigen Annahme. Durch Messung der Lufteinschlüsse in der angenommenen Milch wird die Messgenauigkeit erhöht. Gleichzeitig wird Manipulationen und einer Verminderung der Annahmeperformance entgegenwirkt.

Die Erfindung wird nachfolgend anhand bevorzugter Ausführungsbeispiele näher erläutert, die schematisch in den beiliegenden Zeichnungen dargestellt sind. In den Zeichnungen zeigen schematisch:
- Fig. 1: eine stark schematische Ansicht einer erfindungsgemäßen Vor- richtung zur Durchführung des erfindungsgemäßen Verfahrens;
- Fig. 2: eine detaillierte Ansicht der Vorrichtung aus Fig. 1;
- Figuren 3 und 4: die Vorrichtung aus Fig. 2 in unterschiedlichen Verfahrensstadien bei der Durchführung des erfindungsgemäßen Verfahrens;
- Fig. 5: ein weiteres Ausführungsbeispiel einer erfindungsgemäßen Vor- richtung zur Durchführung des erfindungsgemäßen Verfahrens;
- Fig. 6: ein weiteres Ausführungsbeispiel einer erfindungsgemäßen Vor- richtung zur Durchführung des erfindungsgemäßen Verfahrens; und
- Fig. 7: eine perspektivische Detailansicht der Vorrichtungen der Figuren 2 bis 6 im Leitungsbereich unterstromig des Zwischenspeichers.

Gleich wirkende Elemente sind in den Figuren durchgehend mit denselben Bezugszeichen gekennzeichnet.

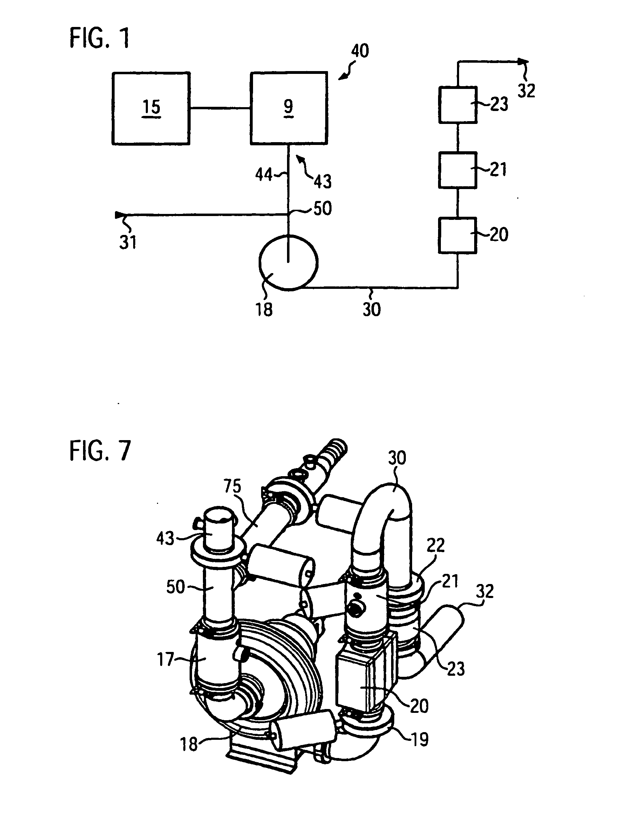

Ein erstes Ausführungsbeispiel einer erfindungsgemäßen Vorrichtung ist in Fig. 1 dargestellt. Die Vorrichtung weist eine Messleitung 30 auf, die sich zwischen einer Zulauföffnung 31 und einer Auslauföffnung 32 erstreckt. In der Messleitung 30 ist eine Pumpe 18 angeordnet, die zum aktiven Fördern von Flüssigkeit durch die Messleitung 30 dient. Auf der der Auslauföffnung 32 zugewandten Seite der Pumpe 18 ist in der Messleitung 30 eine Durchflussmesseinrichtung 20 zum Erfassen der durch die Messleitung 30 fließenden Flüssigkeitsmenge vorgesehen. An diese Durchflussmesseinrichtung 20 schließt sich in Strömungsrichtung, das heißt zur Auslauföffnung 32 hin, eine Gasanteilsmesseinrichtung 21 und ein Rückschlagventil 23 an.

Die in Fig. 1 dargestellte Vorrichtung verzichtet auf einen Gasabscheider im Verlauf der Messleitung 30. Zum Entgasen der in der Messleitung 30 strömenden Flüssigkeit vor Erreichen der Durchflussmesseinrichtung 20 ist vielmehr eine Entgasungsanordnung 40 mit einem Zwischenspeicher 43 vorgesehen, der an einer Abzweigung 50 nach oben von der Messleitung 30 abzweigt. Dieser Zwischenspeicher 43 weist eines Speicherleitung 44 auf, an der ein Speicherbehälter 9 angeordnet ist, der auch als Ansaugbehälter bezeichnet werden kann. An diesem Speicherbehälter 9 ist wiederum eine Einrichtung 15 zum Erzeugen eines Unterdruckes im Speicherbehälter 9 angeordnet.

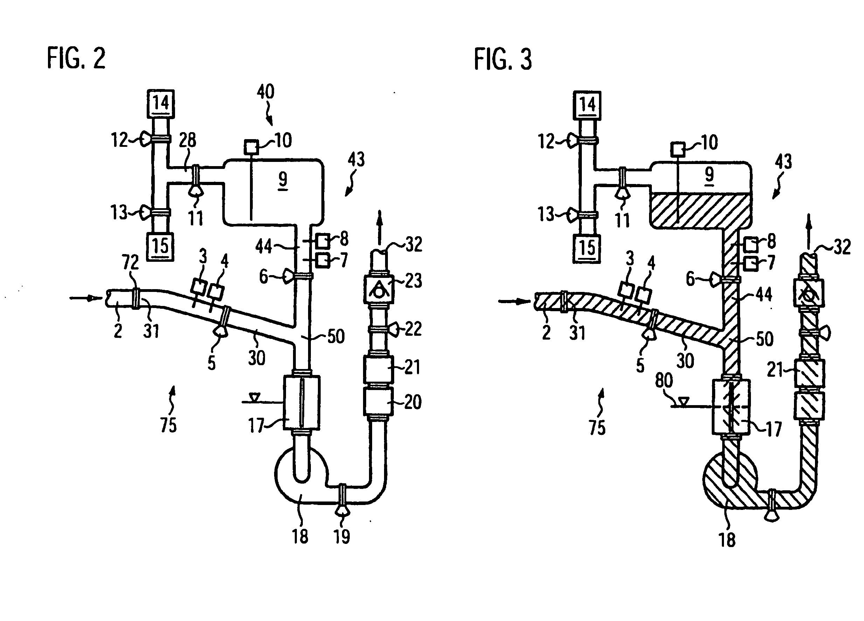

Die Vorrichtung der Fig. 1 ist im Detail in Fig. 2 beschrieben. Wie Fig. 2 zeigt, ist im Bereich der Zulauföffnung 31 der Messleitung 30 eine Anschlusseinrichtung 72 vorgesehen, an der ein Ansaugschlauch 2 für Milch angeordnet ist, der eine Übernahme aus einem Lieferantentank erlaubt. Ausgehend von der Zulauföffnung 31 ist im Lauf der Messleitung 30 ein Sensor 3 angeordnet, der zum Nachweis von Flüssigkeit, insbesondere Milch, und zur Temperaturmessung in der Messleitung 30 dient. Im weiteren Verlauf der Messleitung 30 ist ein Drucksensor 4 vorgesehen, an den sich ein als Absperrventil ausgebildetes Eingangsventil 5 anschließt. Im weiteren Verlauf der Messleitung 30 folgt daraufhin die Abzweigung 50, an der die Speicherleitung 44 der Entgasungsanordnung 40 von der Messleitung 30 abzweigt. Im Bereich 75 zwischen der Zulauföffnung 31 und der Abzweigung 50 verläuft die Messleitung 30 gegen die Horizontale geneigt, so dass ihre Höhe mit abnehmendem Abstand von der Abzweigung 50 abnimmt.

Im Anschluss an die Abzweigung 50 verläuft die Messleitung 30 im Wesentlichen senkrecht nach unten. In diesem Leitungsbereich ist an der Messleitung 30 ein Füllstandssensor 17 vorgesehen, der insbesondere als kombinierter Gas-Füllstandssensor ausgebildet sein kann. Hierauf schließt sich die Pumpe 18 im Verlauf der Messleitung 30 an. Im Anschluss an die Pumpe 18 verläuft die Messleitung 30 im Wesentlichen waagerecht. In diesem waagerecht verlaufenden Bereich ist ein weiteres Absperrventil 19 in der Messleitung 30 angeordnet.

Im Anschluss an das Absperrventil 19 verläuft die Messleitung 30 im Wesentlichen senkrecht nach oben. In diesem Leitungsbereich sind die Durchtlussmesseinrichtung 20 und die Gasanteilsmesseinrichtung 21 aufeinander folgend angeordnet. Hieran schließt sich, mit abnehmendem Abstand zur Auslauföffnung 32, ein weiteres Ventil 22. das als Absperr- und/oder Reduzierventil ausgebildet sein kann, sowie das Rückschlagventil 23 an. Im Bereich der Auslauföffnung 32 kann an der Messleitung 30 ein als Fahrzeugtank ausgebildeter Tank vorgesehen sein.

In der Speicherleitung 44, die an der Abzweigung 50 in die Messleitung 30 einmündet, ist ein weiteres Absperrventil 6 vorgesehen. Auf der der Abzweigung 50 abgewandten Seite des Absperrventils 6 sind an der Speicherleitung 44 ein Flüssigkeitssensor 7, insbesondere Milchsensor, sowie ein Drucksensor 8 angeordnet.

Hieran schließt sich, auf der der Abzweigung 50 abgewandten Seite des Absperrventils 6, der Speicherbehälter 9 an, der als Vakuumbehälter bezeichnet werden kann. Am Speicherbehälter 9 des Zwischenspeichers 43 der Entgasungsanordnung 40 ist ein Füllstandssensor 10 vorgesehen. In einem oberen Bereich des Speicherbehälters 9 mündet in diesen eine Gasleitung 28 zum Zuführen von Gas in den Speicherbehälter 9 und zum Evakuieren des Speicherbehälters 9 ein. In dieser Gasleitung 28 ist ein als Absperrventil ausgebildetes Ventil 11 vorgesehen. Auf der dem Speicherbehälter 9 abgewandten Seite des Ventils 11 steht die Gasleitung 28 über ein Absperrventil 12 mit einer Belüftungseinrichtung 14 und über ein Absperrventil 13 mit der Einrichtung 15 zum Erzeugen eines Unterdruckes in Leitungsverbindung.

Die in Fig. 2 dargestellte Vorrichtung kann wie folgt betrieben werden:

### Annahmevorgang

Zur Erläuterung des Annahmevorganges wird auf Fig. 3 verwiesen, wobei der Einfachheit halber zunächst davon ausgegangen wird, dass das System im Bereich des Füllstandssensors 17 bereits bis zur Pegelhöhe 80 gefüllt ist.

Zu Beginn der Annahme wird das Absperrventil 12 geschlossen und somit eine Verbindung zwischen der Belüftungseinrichtung 14 und dem Speicherbehälter 9 unterbrochen. Die im Leitungsverlauf zwischen der Zulauföffnung 31 und der Einrichtung 15 zum Erzeugen eines Unterdruckes angeordneten Ventile 5, 6, 11 und 13 werden sodann geöffnet. Die Einrichtung 15 zum Erzeugen eines Unterdruckes saugt dann über die Zulauföffnung 31 Milch in die Messleitung 30 und über die Abzweigung 50 in den Zwischenspeicher 43. Der Speicherbehälter 9 ist dabei vorzugsweise so dimensioniert, dass er zusammen mit der Speicherleitung 44 und insbesondere mit dem Eingangsbereich 75 der Messleitung 30 das gesamte Volumen des Ansaugschlauches 2 aufnehmen kann.

Sobald der Flüssigkeitssensor 7 und/oder der Drucksensor 8 Flüssigkeit, insbesondere Milch, detektiert, werden die Ventile 11 und 13 geschlossen und somit die Verbindung zwischen dem Speicherbehälter 9 und der Einrichtung 15 zum Erzeugen eines Unterdruckes getrennt. Aufgrund des Restvakuums im Speicherbehälter 9 wird jedoch weiter Flüssigkeit in den Vakuumbehälter 9 gesogen. Der Füllstand des Speicherbehälters 9 wird dabei mittels des Füllstandssensors 10 überwacht. Sofern ein Überlaufen des Speicherbehälters 9 droht, werden entsprechende Gegenmaßnahmen initiiert.

Aufgrund der Leitungsführung, insbesondere aufgrund der Tatsache, dass die Leitungshöhe zwischen der Abzweigung 50 und dem Speicherbehälter 9, dem Füllstandssensor 17 und dem Speicherbehälter 9 und der Pumpe 18 und dem Speicherbehälter 9 zum Speicherbehälter 9 hin zunimmt, entgast sich das System selbst, wobei Gasanteile im Speicherbehälter 9 gesammelt werden. Ein Abschluss des selbstständigen Entgasens kann beispielsweise daran erkannt werden, dass der Füllstandssensor 17 ein voll gefülltes Rohr nachweist.

Nun wird die Pumpe 18 gestartet. Die Pumpe 18 baut einen Druck auf, der niedriger ist als der im Speicherbehälter 9. Dadurch wird die Flüssigkeit aus dem Behälter 9 zurück in die Messleitung 30 gezogen. Sobald der Flüssigkeitssensor 7 keine Benetzung, also Leerstand anzeigt, wird, gegebenenfalls mit einer vorher bestimmten, kleinen Zeitverzögerung, das Absperrventil 6 geschlossen und hierdurch der Speicherbehälter 9 von der Messleitung 30 abgetrennt. Der Speicherbehälter 9 kann nun durch Öffnen der Ventile 11 und 13 erneut evakuiert werden.

Die Pumpe 18 hält über den weiteren Annahmevorgang den Unterdruck aufrecht und fördert Flüssigkeit aus dem Ansaugschlauch 2 zur Auslauföffnung 32, wobei die Saugleistung der Pumpe 18 geregelt wird. Als Regelgröße wird dabei ein Saugdruck herangezogen, der vom Drucksensor 4 im Eingangsbereich 75 der Messleitung 30 ermittelt wird. Durch eine solche Regelung kann erreicht werden, dass sich die Pumpe 18 selbst an die unterschiedlichen Annahmegegebenheiten, beispielsweise unterschiedliche Leitungsquerschnitte, unterschiedliche Leitungslängen, unterschiedliches Tankniveaus usw., anpasst und der Saugdruck in einem Wertebereich bleibt, bei dem eine Kavitation der Flüssigkeit unterbunden ist.

Bei einer Störung, beispielsweise durch Manipulation oder Undichtigkeiten in den Schlauchverschraubungen oder den Schläuchen, kann es bei der Annahme zu signifikanten Gasbeimengungen in der Flüssigkeit kommen. Diese werden vom Füllstandssensor 17 und gegebenenfalls auch von der Gasanteilsmesseinrichtung 21 detektiert. Sobald der Füllstandssensor 17 und/oder die Gasanteilsmesseinrichtung 21 Gasbeimengungen detektieren, kann die Leistung der Pumpe 18 und somit der Saugdruck reduziert werden. Zusätzlich kann eine Störungsmeldung generiert werden. Wird hierdurch der Gaseinschlag noch nicht beseitigt, so kann die Gasbeimengung bis zu einem bestimmten Grad toleriert werden und bei der Mengenbestimmung durch Einrechnung der Werte der Gasanteilsmesseinrichtung 21 herausgerechnet werden.

Bildet sich im Liefertank, in dem der Ansaugschlauch 2 angeordnet ist, beispielsweise aufgrund niedrigen Füllstands ein Sog, so kann es ebenfalls zu Gaseinschlüssen in der Flüssigkeitsströmung in der Messleitung 30 kommen. Auch in diesem Fall wird die Saugleistung der Pumpe 18 durch Regelung auf Grundlage des Drucksensors 4 solange reduziert, bis sich der Sog zurückbildet.

### Ende der Annahme

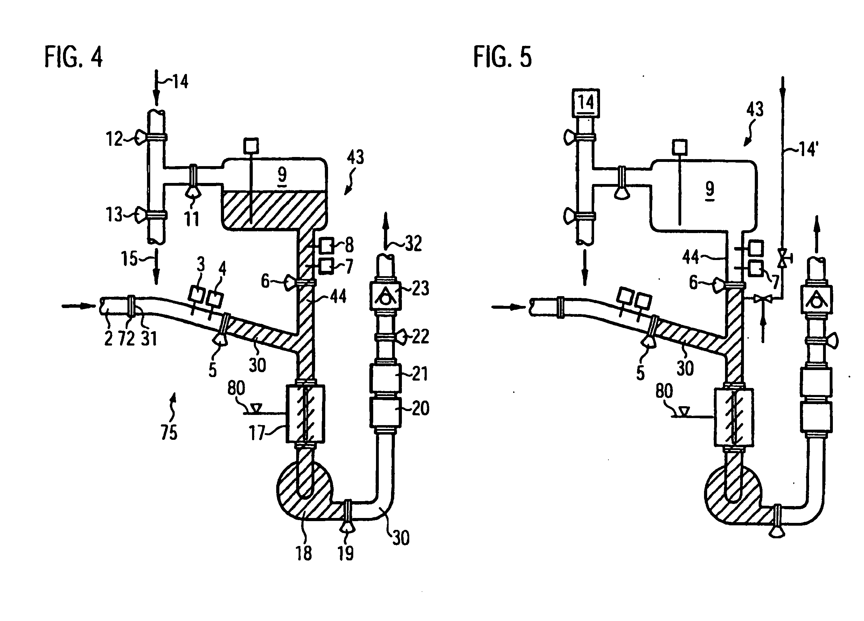

Zur Erläuterung der Verfahrensführung am Annahmeende wird auf Fig. 4 verwiesen.

Zum Ende der Annahme kommt es zu massiven Gaseinschlägen, was zuerst am Sensor 3 detektiert wird. Würde trotz der starken Gaseinschläge unverändert weitergepumpt, so bestünde das Risiko, dass der Unterdruck im Eingangsbereich 75 der Messleitung 30 und somit die Selbstansaugungsfunktion der Pumpe 18 zusammenbricht. Ein solcher Zustand würde vom Drucksensor 4 detektiert werden.

Sobald somit vom Sensor 3, gegebenenfalls auch vom Füllstandssensor 17, große Gasanteile nachgewiesen werden, wird die Pumpe 18 heruntergefahren. Dabei wird auch das Ventil 19 geschlossen, so dass der Gaseintrag in die Messstrecke, welche durch die Durchflussmesseinrichtung 20 und die Gasanteilsmesseinrichtung 21 gebildet wird, so gering wie möglich gehalten wird. Auch das Absperrventil 19 kann zur Messstrecke gerechnet werden.

Anschließend oder gleichzeitig wird das Absperrventil 6 geöffnet, so dass eine Fluidverbindung zwischen dem Zwischenspeicher 43 und der Messleitung 30 hergestellt ist. Aufgrund des im Speicherbehälter 9 befindlichen Unterdrucks wird der Inhalt des eingangsseitigen Leitungssystems in den Speicherbehälter 9 eingesaugt. Insbesondere kann das Leitungssystem im Bereich des Ansaugschlauches 2 weitgehend leer gesaugt werden. Um das Ansaugen zu unterstützen, können die Ventile 11 und 13 geöffnet werden, so dass eine Leitungsverbindung zwischen dem Speicherbehälter 9 und der Einrichtung 15 zum Erzeugen eines Unterdrucks besteht und somit der Unterdruck im Speicherbehälter 9 aufrechterhalten wird.

Durch die leichte Schrägstellung der Messleitung 30 im Bereich 75 hinter der Anschlusseinrichtung 72 für den Ansaugschlauch 2 läuft die Flüssigkeit beim Ansaugen in den Bereich hinter das Eingangventil 5, das heißt in den Bereich der Messleitung 30, der sich auf der der Zulauföffnung 31 abgewandten Seite des Eingangsventils 5 befindet. Nun wird das Eingangsventil 5 geschlossen.

In diesem Zustand ist das Restvolumen im Bereich des Zwischenspeichers 43 angeordnet. Eventuell enthaltene Gasanteile werden durch Zeitablauf selbstständig abgeschieden und sammeln sich im oberen Bereich des Speicherbehälters 9. Im Anschluss hierauf kann der Zwischenspeicher 43 wieder entleert werden.

Zum Entleeren wird das Absperrventil 13 geschlossen und der Zwischenspeicher 43 somit von der Einrichtung 15 zum Erzeugen eines Unterdruckes getrennt. Das Absperrventil 19, das den Zwischenspeicher 43 von der Auslauföffnung 32 trennt, wird hingegen geöffnet. In diesem Zusammenhang wird das unterstromig der Durchflussmesseinrichtung 20 und der Gasanteilsmesseinrichtung 21 angeordnete Ventil 22 auf "Reduzierung" geschaltet, das heißt der Leitungsquerschnitt wird verkleinert, um den Strömungswiderstand zu erhöhen. Hierzu kann beispielsweise eine Blende in den Leitungsquerschnitt der Messleitung 30 eingefahren werden.

Das Ventil 22 kann als Scheibenventil mit Bohrung ausgebildet sein. Es dient der Reduzierung der Durchflussgeschwindigkeit beim Entleeren des Zwischenspeichers 43, das heißt beim so genannten "Niveaufahren". Gleichzeitig kann mittels dieses Ventils 22 der Druck im Bereich der Durchflussmesseinrichtung 20 und der Gasanteilsmesseinrichtung 21 erhöht werden, wodurch eventuell vorhandene Gasblasen im Volumen reduziert werden, so dass die Messgenauigkeit weiter gesteigert werden kann.

Das Rückschlagventil 23 kann dabei verhindern, dass Milch zurück in die Messstrecke fließt. Gleichzeitig kann auch dieses Ventil zu einer Druckerhöhung in der Messstrecke dienen.

Anschließend wird das Ventil 12 geöffnet und die entgaste Flüssigkeit, die im Zwischenspeicher 43 enthalten ist, wird durch Druckgas aus der Belüftungseinrichtung 14 in die Messleitung 30 gedrückt. Die Flüssigkeitssäule wird solange befördert, bis der Füllstand den Flüssigkeitssensor 7 erreicht hat oder bis im Füllstandssensor 17 der Ausgangspegel 80 erreicht wird, der auch als Abgrenzniveau bezeichnet werden kann.

Sofern sich noch Restflüssigkeit im Bereich des Ansaugschlauches 2 befindet, kann der Vorgang des Einsaugens in den Zwischenspeicher 43 und Zurückführens in die Messleitung 30 gegebenenfalls mehrfach wiederholt werden. Hierdurch kann der Ansaugschlauch 2 besonders gut von Restflüssigkeit und gegebenenfalls nachlaufender Flüssigkeit des Liefertanks befreit werden.

Sollte am Annahmeende trotz des Entgasungsvorganges im Zwischenspeicher 43 Gas in die Messstrecke eindringen, so kann dies mittels der Gasanteilsmesseinrichtung 21 messtechnisch erfasst werden. Die entsprechenden Messwerte können zur Kompensation der Messwerte der Durchflussmesseinrichtung 20 herangezogen werden. Überdies kann ein übermäßiger Gaseinschlag im Bereich der Gasanteilsmesseinrichtung 21 durch Ausgabemittel angezeigt werden.

Ein weiteres Ausführungsbeispiel einer erfindungsgemäßen Vorrichtung ist in Fig. 5 dargestellt. Das Ausführungsbeispiel der Fig. 5 unterscheidet sich vom zuvor beschriebenen Ausführungsbeispiel dadurch, dass am Zwischenspeicher 43 im Bereich der Speicherleitung 44 auf der der Messleitung 30 zugewandten Seiten des Absperrventils 6 eine zweite Belüftungseinrichtung 14' vorgesehen ist. Diese zusätzliche Belüftungseinrichtung 14' kann zur Erhöhung der Verfahrensgeschwindigkeit dienen.

Insbesondere ermöglicht es die zusätzliche Belüftungseinrichtung 14', das Absperrventil 6 bei der Entleerung des Zwischenspeichers 43 zu schließen, sobald der im Bereich des Absperrventil 6 angeordnete Flüssigkeitssensor 7 Leerstand meldet. Daraufhin kann der Bereich des Zwischenspeichers 43, welcher auf der der Messleitung 30 abgewandten Seite des Absperrventils 6 angeordnet ist und insbesondere den Speicherbehälter 9 umfasst, bereits wieder evakuiert werden, so dass der Zwischenspeicher 43 besonders rasch für einen erneuten Ansaugvorgang, beispielsweise zur Restmengenansaugung, bereitsteht. Um auch den Bereich des Zwischenspeichers 43 zu entleeren, der auf der der Messleitung 30 zugewandten Seite des Absperrventils 6 angeordnet ist, wird nach dem Schließen des Absperrventils 6 Gas über die zweite Belüftungseinrichtung 14' in den Zwischenspeicher 43 eingeleitet und hierbei das Flüssigkeitsniveau bis zum Pegel 80 abgesenkt. Das so genannte "Niveaufahren" wird dadurch erheblich erleichtert.

Da der Füllstand mittels des Füllstandssensors 17 gemessen wird, ist ein exaktes Niveaufahren auf den Pegel 80 möglich, aber nicht unbedingt erforderlich. Da das Niveaufahren in einem Bereich geringen Querschnittes erfolgt, der durch den vergleichsweise kleinen Rohrdurchmesser gegeben ist, wird eine besonders hohe Genauigkeit ermöglicht.

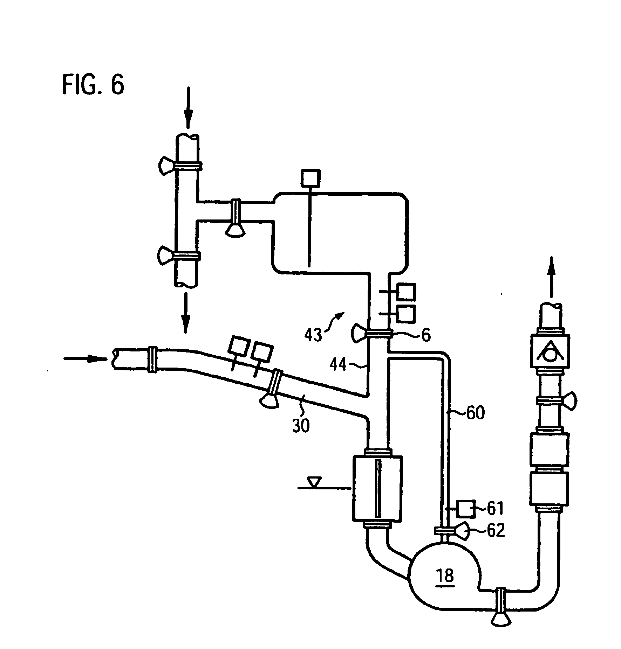

Ein weiteres Ausführungsbeispiel einer erfindungsgemäßen Vorrichtung ist in Fig. 6 dargestellt. Das in Fig. 6 dargestellte Ausführungsbeispiel unterscheidet sich von den zuvor erläuterten Ausführungsbeispielen dadurch, dass am höchsten Punkt der Pumpe 18 eine als Rohr ausgebildete Entlüftungsleitung 60 angebracht ist, die, insbesondere auf der der Messleitung 30 zugewandten Seite des Absperrventils 6, in die Speicherleitung 44 einmündet. Alternativ könnte die Entlüftungsleitung 60 auch auf der der Messleitung 30 abgewandten Seite des Absperrventils 6 in den Zwischenspeicher 43 einmünden. Die Entlüftungsleitung 60 ermöglicht es, eventuell auftretende Gasansammlungen im oberen Bereich der Pumpe 18 abzuführen, das heißt die Pumpe 18 gezielt zu entlüften. Ein optional vorhandener Sensor 61 in der Entlüftungsleitung 60 kann zur Überwachung des Entlüftungsvorganges dienen. Weist dieser Sensor 61 Flüssigkeit nach, so ist der Entlüftungsvorgang abgeschlossen. In diesem Fall kann ein zwischen dem Sensor 61 und der Pumpe 18 an der Entlüftungsleitung 60 angeordnetes Ventil 62 geschlossen werden.

Der abströmseitige Bereich der Messleitung 30, das heißt der der Auslauföffnung 32 zugewandte Bereich ist in perspektivischer Ansicht im Detail in Fig. 7 dargestellt. Wie Fig. 7 zeigt ist die Messleitung 30 in diesem Bereich mit einer Doppel-U-Struktur ausgebildet.

In einem ersten vertikal verlaufenden Schenkel der U-Struktur, der von der Abzweigung 50 des Zwischenspeichers 43 senkrecht nach unten verläuft, ist der Füllstandssensor 17 sowie die Pumpe 18 angeordnet. In einem zweiten vertikal verlaufenden Schenkel der U-Struktur sind das Absperrventil 19, die Durchflussmesseinrichtung 20 und gegebenenfalls die Gasanteilsmesseinrichtung 21 angeordnet. In einem dritten vertikal verlaufenden Schenkel der U-Struktur sind das Ventil 22 sowie das Rückschlagventil 23 angeordnet.

Eine solche Doppel-U-Struktur ist im Hinblick auf die Entgasung besonders vorteilhaft. Insbesondere erlaubt sie es, auf die Gasanteilsmesseinrichtung 21 unter Umständen gänzlich zu verzichten.

Wie oben erläutert, wird die Messanlage mitsamt der Pumpe 18 heruntergefahren, sobald der Füllstandssensor 17 oder der Sensor 3 Gas detektieren. Gas, das bereits in die Messleitung 30 eingedrungen ist, entweicht in der Doppel-U-Struktur nach oben und wird durch das anschließend im Zwischenspeicher 43 erzeugte Vakuum nach oben abgesaugt. Da sich die Flüssigkeit zu diesem Zeitpunkt aufgrund der ruhenden Pumpe 18 im Bereich der Durchflussmesseinrichtung 20 nicht bewegt, wird von der vorzugsweise als magnetoinduktive Einrichtung ausgebildeten Durchflussmesseinrichtung 20 auch keine Flüssigkeitsströmung nachgewiesen, das heißt die Gasströmung findet in ruhender Flüssigkeit statt.

Wenn die Pumpe 18 und das Messsystem bei eintreffender Luft schnell genug abgeschaltet werden, so gelangt lediglich soviel Gas in die Messleitung 30, wie beim Zwischenstopp bis zur nächsten Ansaugung über den Zwischenspeicher 43 und die Einrichtung 15 zum Erzeugen eines Unterdruckes bis zur nächsten Ansaugung nach oben entgasen kann.

Anschließend angesaugte Milch kann immer über den Zwischenspeicher 43 und die Einrichtung-15 zum Erzeugen eines Vakuums angesaugt werden, so dass entgaste Milch vorliegt, die mittels Überdruck durch die Messleitung 30 gedrückt wird.

## Patentansprüche

1. Verfahren zur Mengenbestimmung bei der Übergabe einer Flüssigkeit, insbesondere von Milch, bei dem
- die Flüssigkeit an einer Zulauföffnung (31) in eine Messleitung (30) eingeleitet wird und an einer Auslauföffnung (32) aus der Messleitung (30) ausgeleitet wird, und
- eine durch die Messleitung (30) strömende Flüssigkeitsmenge mittels einer der Messleitung (30) zugeordneten Durchflussmesseinrichtung (20) bestimmt wird,
- wobei zum Entgasen der in der Messleitung (30) strömenden Flüssigkeit vor Erreichen der Durchflussmesseinrichtung (20) eine Entgasungsanordnung (40) vorgesehen wird,
**dadurch gekennzeichnet,**
- **dass** in der Messleitung (30) befindliche Flüssigkeit diskontinuierlich der Entgasungsanordnung (40) zugeführt wird, so dass die Entgasungsanordnung zeitweise umgangen wird.

2. Verfahren nach Anspruch 1,
**dadurch gekennzeichnet,**
**dass** in der Messleitung (30) befindliche Flüssigkeit zumindest zu Beginn und/oder zum Ende der Übergabe der Entgasungsanordnung (40) zugeführt wird, und/oder
**dass** in der Messleitung (30) befindliche Flüssigkeit beim Überschreiten eines vorher bestimmten Wertes für den Gasanteil der Entgasungsanordnung (40) zugeführt wird.

3. Verfahren nach einem der vorstehenden Ansprüche,
**dadurch gekennzeichnet,**
- **dass** die Entgasungsanordnung (40) einen Zwischenspeicher (43) aufweist, der zwischen der Zulauföffnung (31) und der Durchflussmesseinrichtung (20), insbesondere in einem Rohrleitungsbereich der Messleitung (30), von der Messleitung (30) abzweigt, und
- **dass** zwischen der Zulauföffnung (31) und der Durchflussmesseinrichtung (20) ein Flüssigkeitsvolumen aus der Messleitung (30) entnommen wird und zum Entgasen in den Zwischenspeicher (43) überführt wird, und
- **dass** das entnommene Flüssigkeitsvolumen anschließend wieder aus dem Zwischenspeicher (43) zwischen der Zulauföffnung (31) und der Durchflussmesseinrichtung (20) in die Messleitung (30) zurückgeführt wird.

4. Verfahren nach Anspruch 3,
**dadurch gekennzeichnet,**
**dass** der Zwischenspeicher (43) eine Speicherleitung (44) aufweist, an der vorzugsweise ein Speicherbehälter (9) vorgesehen ist.

5. Verfahren nach einem der Ansprüche 3 oder 4,
**dadurch gekennzeichnet,**
**dass** zum Entnehmen des Flüssigkeitsvolumens aus der Messleitung (30) am Zwischenspeicher (43) ein Unterdruck erzeugt wird.

6. Verfahren nach einem der Ansprüche 3 bis 5,
**dadurch gekennzeichnet,**
**dass** zum Zurückführen des Flüssigkeitsvolumens in die Messleitung (30) ein Gas in den Zwischenspeicher (43) eingeleitet wird und/oder dass zum Zurückführen des Flüssigkeitsvolumens in die Messleitung (30) eine an der Messleitung (30) angeordnete Pumpe (18) betätigt wird.

7. Verfahren nach einem der Ansprüche 3 bis 6,
**dadurch gekennzeichnet,**
**dass** der Zwischenspeicher (43) mittels eines am Zwischenspeicher (43) angeordneten Ventils (6) abgesperrt wird, wenn der Füllstand in dem Zwischenspeicher (43) beim Zurückführen des Flüssigkeitsvolumens einen bestimmten Wert unterschreitet.

8. Verfahren nach einem der Ansprüche 3 bis 7,
**dadurch gekennzeichnet,**
**dass** beim Entnehmen des Flüssigkeitsvolumens aus der Messleitung (30) eine Fluidverbindung zwischen dem Zwischenspeicher (43) und der Durchflussmesseinrichtung (20) gesperrt wird und/oder
**dass** beim Zurückführen des Flüssigkeitsvolumens in die Messleitung (30) eine Fluidverbindung zwischen der Zulauföffnung (31) und dem Zwischenspeicher (43) gesperrt wird.

9. Verfahren nach einem der Ansprüche 3 bis 8,
**dadurch gekennzeichnet,**
**dass** beim Zurückführen des Flüssigkeitsvolumens in die Messleitung (30) ein Strömungsquerschnitt der Messleitung (30), insbesondere durch ein unterstromig der Durchflussmesseinrichtung (20) angeordnetes Ventil (22), reduziert wird.

10. Verfahren nach einem der vorstehenden Ansprüche,
**dadurch gekennzeichnet,**
**dass** in der Messleitung (30) ein Druck gemessen wird und dass die an der Messleitung (30) angeordnete Pumpe (18) in Abhängigkeit des gemessenen Drucks gesteuert wird.

11. Verfahren nach einem der vorstehenden Ansprüche,
**dadurch gekennzeichnet,**
**dass** ein Gasanteil der in der Messleitung (30) befindlichen Flüssigkeit ermittelt wird und
**dass** der gemessene Gasanteil zur Kompensation von Messwerten der Durchflussmesseinrichtung (20) herangezogen wird.

12. Verfahren nach einem der vorstehenden Ansprüche,
**dadurch gekennzeichnet,**
**dass** ein Gasanteil der in der Messleitung (30) befindlichen Flüssigkeit ermittelt wird und
**dass** die an der Messleitung (30) angeordnete Pumpe (18) in Abhängigkeit des gemessenen Gasanteils gesteuert wird.

13. Vorrichtung zur Mengenbestimmung bei der Übergabe einer Flüssigkeit, insbesondere zum Durchführen des Verfahrens nach einem der vorstehenden Ansprüche, mit
- einer Messleitung (30), die an ihrem einen Ende eine Zulauföffnung (31) und an ihrem anderen Ende eine Auslauföffnung (32) für die Flüssigkeit aufweist, und
- einer der Messleitung (30) zugeordneten Durchflussmesseinrichtung (20) zum Messen einer durch die Messleitung (30) strömenden Flüssigkeitsmenge,
**dadurch gekennzeichnet,**
- **dass** ein Zwischenspeicher (43) vorgesehen ist, der zwischen der Zulauföffnung (31) und der Durchflussmesseinrichtung (20), insbesondere in einem Rohrleitungsbereich der Messleitung (30), von der Messleitung (30) abzweigt, und
- **dass** eine Einrichtung (15) zum Erzeugen eines Unterdruckes in dem Zwischenspeicher (43) vorgesehen ist, mittels dem ein Flüssigkeitsvolumen aus der Messleitung (30) in den Zwischenspeicher (43) überführbar ist.

14. Vorrichtung nach Anspruch 13,
**dadurch gekennzeichnet,**
**dass** am Zwischenspeicher (43) eine Belüftungseinrichtung (14) vorgesehen ist, mittels der zum Zurückführen des Flüssigkeitsvolumens aus dem Zwischenspeicher (43) in die Messleitung (30) ein Gas in den Zwischenspeicher (43) einleitbar ist.

15. Vorrichtung nach einem der Ansprüche 13 bis 14,
**dadurch gekennzeichnet,**
**dass** der Zwischenspeicher (43) eine Speicherleitung (44) aufweist, an der vorzugsweise ein Speicherbehälter (9) vorgesehen ist.

16. Vorrichtung nach einem der Ansprüche 13 bis 15,
**dadurch gekennzeichnet,**
**dass** entlang dem Zwischenspeicher (43) mehrere Belüftungseinrichtungen (14, 14') angeordnet sind und
**dass** an dem Zwischenspeicher (43) zwischen den einzelnen Belüftungseinrichtungen (14, 14') jeweils ein Absperrventil (6) angeordnet ist.

17. Vorrichtung nach einem der Ansprüche 13 bis 16,
**dadurch gekennzeichnet,**
**dass** an dem Zwischenspeicher (43), insbesondere am Speicherbehälter (9), zumindest ein Füllstandssensor (10) vorgesehen ist.

18. Vorrichtung nach Anspruch 17,
**dadurch gekennzeichnet,**
**dass** zwischen der Einrichtung (15) zum Erzeugen des Unterdruckes und dem Zwischenspeicher (43) ein Ventil (11) vorgesehen ist, das in Abhängigkeit des vom Füllstandssensor (10) ermittelten Füllstandes betätigbar ist.

19. Vorrichtung nach einem der Ansprüche 13 bis 18,
**dadurch gekennzeichnet,**
**dass** an der Messleitung (30), insbesondere zwischen der Abzweigung (50) des Zwischenspeichers (43) und der Auslauföffnung (32), eine Pumpe (18) vorgesehen ist, und
**dass** an der Pumpe (18) vorzugsweise eine Entlüftungsleitung (60) vorgesehen ist, die insbesondere in den Zwischenspeicher (43) einmündet.

20. Vorrichtung nach einem der Ansprüche 13 bis 19,
**dadurch gekennzeichnet,**
**dass** die Höhe der Messleitung (30) im Bereich zwischen der Zulauföffnung (31) und dem Zwischenspeicher (43) zumindest bereichsweise zum Zwischenspeicher (43) hin abnimmt.

21. Vorrichtung nach einem der Ansprüche 13 bis 20,
**dadurch gekennzeichnet,**
**dass** an der Messleitung (30) im Bereich der Auslauföffnung (32) ein Tank angeordnet ist und
**dass** an der Messleitung (30) im Bereich der Zulauföffnung (31) eine Anschlusseinrichtung (72) für einen Ansaugschlauch (2) angeordnet ist.

22. Vorrichtung nach einem der Ansprüche 13 bis 21,
**dadurch gekennzeichnet,**
**dass** die Messleitung (30) auf der der Zulauföffnung (31) abgewandten Seite des Zwischenspeichers (43) U-förmig, insbesondere doppelt U-förmig ausgebildet ist.

23. Vorrichtung nach einem der Ansprüche 13 bis 22,
**dadurch gekennzeichnet,**
**dass** eine Steuereinrichtung vorgesehen ist, die zur Durchführung des Verfahrens nach einem der Ansprüche 1 bis 12 eingerichtet ist.

## Claims

1. Method for determining an amount during the transfer of a liquid, in particular milk, wherein
- the liquid is introduced at a supply opening (31) into a measurement line (30) and is removed from the measurement line (30) at an outlet opening (32), and
- an amount of liquid flowing through the measurement line (30) is determined by means of a flow measuring unit (20) assigned to the measurement line (30),
- whereby a degassing arrangement (40) is provided for the degassing of the liquid flowing in the measurement line (30) before it reaches the flow measuring unit (20),
**characterised in that**
- liquid present in the measurement line (30) is discontinuously fed to the degassing arrangement (40) so that the degassing arrangement is bypassed at times.

2. Method according to claim 1,
**characterised in that**
liquid present in the measurement line (30) is fed to the degassing arrangement (40) at least at the beginning and / or at the end of the transfer, and / or
liquid present in the measurement line (30) is fed to the degassing arrangement (40) if a previously determined value for the gas portion is exceeded.

3. Method according to one of the preceding claims,
**characterised in that**
- the degassing arrangement (40) comprises an intermediate storage unit (43) which branches from the measurement line (30) between the supply opening (31) and the flow measuring unit (20), in particular in a pipeline region of the measurement line (30), and
- a liquid volume is removed from the measurement line (30) between the supply opening (31) and the flow measuring unit (20) and is conveyed into the intermediate storage unit (43) for degassing, and
- the liquid volume removed is then fed from the intermediate storage unit (43) between the supply opening (31) and the flow measuring unit (20) back into the measurement line (30) again.

4. Method according to claim 3,
**characterised in that**
the intermediate storage unit (43) comprises a storage line (44), on which a storage container (9) is preferably provided.

5. Method according to one of the claims 3 or 4,
**characterised in that**
an underpressure is generated on the intermediate storage unit (43) for the removal of the liquid volume from the measurement line (30).

6. Method according to one of the claims 3 to 5,
**characterised in that**
a gas is introduced into the intermediate storage unit (43) for the feedback of the liquid volume into the measurement line (30), and/or a pump (18) arranged on the measurement line (30) is actuated for the feedback of the liquid volume into the measurement line (30).

7. Method according to one of the claims 3 to 6,
**characterised in that**
the intermediate storage unit (43) is shut off by means of a valve (6) arranged on the intermediate storage unit (43) if the fill level in the intermediate storage unit (43) falls below a certain value when the liquid volume is fed back.

8. Method according to one of the claims 3 to 7,
**characterised in that**
when removing the liquid volume from the measurement line (30) a fluid connection between the intermediate storage unit (43) and the flow measuring unit (20) is closed off and / or
during feedback of the liquid volume into the measurement line (30) a fluid connection between the supply opening (31) and the intermediate storage unit (43) is closed off.

9. Method according to one of the claims 3 to 8,
**characterised in that**
during feedback of the liquid volume into the measurement line (30) a flow cross-section of the measurement line (30) is reduced, in particular by a valve (22) arranged downstream of the flow measuring unit (20).

10. Method according to one of the preceding claims,
**characterised in that**
a pressure is measured in the measurement line (30) and the pump (18) arranged on the measurement line (30) is controlled in dependence upon the measured pressure.

11. Method according to one of the preceding claims,
**characterised in that**
a gas portion of the liquid present in the measurement line (30) is determined and
the measured gas portion is used to compensate measurement values of the flow measuring unit (20).

12. Method according to one of the preceding claims,
**characterised in that**
a gas portion of the liquid present in the measurement line (30) is determined and
the pump (18) arranged on the measurement line (30) is controlled in dependence upon the measured gas portion.

13. Device for determining an amount during the transfer of a liquid, in particular for implementing the method according to one of the preceding claims, having
- a measurement line (30) which comprises a supply opening (31) at one of its ends and an outlet opening (32) for the liquid at the other end, and
- a flow measuring unit (20) assigned to the measurement line (30) for measuring the amount of liquid flowing through the measurement line (30), **characterised in that**
- an intermediate storage unit (43) is provided which branches from the measurement line (30) between the supply opening (31) and the flow measuring unit (20), in particular in a pipeline region of the measurement line (30), and
- a unit (15) for generating an underpressure in the intermediate storage unit (43) is provided, by means of which a liquid volume can be conveyed from the measurement line (30) into the intermediate storage unit (43).

14. Device according to claim 13,
**characterised in that**
a vent unit (14) is provided on the intermediate storage unit (43), by means of which a gas can be introduced into the intermediate storage unit (43) for the purpose of feedback of the liquid volume from the intermediate storage unit (43) into the measurement line (30).

15. Device according to one of the claims 13 to 14,
**characterised in that**
the intermediate storage unit (43) comprises a storage line (44), on which a storage container (9) is preferably provided.

16. Device according to one of the claims 13 to 15,
**characterised in that**
a plurality of vent units (14, 14') are arranged along the intermediate storage unit (43) and
a shut-off valve (6) is arranged on the intermediate storage unit (43) between each of the individual vent units (14, 14').

17. Device according to one of the claims 13 to 16,
**characterised in that**
at least one fill level sensor (10) is provided on the intermediate storage unit (43), in particular on the storage container (9).

18. Device according to claim 17,
**characterised in that**
a valve (11) is provided between the unit (15) for generating the underpressure and the intermediate storage unit (43), whereby said valve (11) can be actuated in dependence upon the fill level determined by the fill level sensor (10).

19. Device according to one of the claims 13 to 18,
**characterised in that**
a pump (18) is provided on the measurement line (30), in particular between the branch (50) of the intermediate storage unit (43) and the outlet opening (32), and a purge line (60) is preferably provided on the pump (18) and in particular runs into the intermediate storage unit (43).

20. Device according to one of the claims 13 to 19,
**characterised in that**
the height of the measurement line (30) decreases in the region between the supply opening (31) and the intermediate storage unit (43) at least in areas towards the intermediate storage unit (43).

21. Device according to one of the claims 13 to 20,
**characterised in that**
a tank is arranged on the measurement line (30) in the region of the outlet opening (32) and
a connection unit (72) for a suction hose (2) is arranged on the measurement line (30) in the region of the supply opening (31).

22. Device according to one of the claims 13 to 21,
**characterised in that**
the measurement line (30) is formed in a U-shape, in particular a double-U-shape, on the side of the intermediate storage unit (43) facing away from the supply opening (31).

23. Device according to one of the claims 13 to 22,
**characterised in that**
a control device is provided which is adapted to carry out the method according to one of the claims 1 to 12.

## Revendications

1. Procédé de détermination de la quantité lors du transfert d'un liquide, en particulier de lait, dans lequel
- le liquide est introduit dans une conduite de mesure (30) par une ouverture d'entrée (31) et est extrait de la conduite de mesure (30) par une ouverture de sortie (32), et
- une quantité de liquide circulant à travers la conduite de mesure (30) est déterminée au moyen d'un dispositif (20) de mesure du débit associé à la conduite de mesure (30),
- dans lequel, pour évacuer le gaz du liquide circulant dans la conduite de mesure (30) avant qu'il atteigne le dispositif (20) de mesure du débit, il est prévu un dispositif de dégazage (40),
***caractérisé***
- ***en ce que*** le liquide présent dans la conduite de mesure (30) est envoyé de manière discontinue au dispositif de dégazage (40), de telle sorte que le dispositif de dégazage est utilisé par intermittence.

2. Procédé selon la revendication 1, ***caractérisé***
***en ce que*** le liquide présent dans la conduite de mesure (30) est envoyé au dispositif de dégazage (40) au moins au début et/ou à la fin du transfert, et/ou
***en ce que*** le liquide présent dans la conduite de mesure (30) est envoyé au dispositif de dégazage (40) lorsque la proportion de gaz dépasse une valeur préalablement déterminée.

3. Procédé selon l'une quelconque des revendications précédentes,
***caractérisé***
- **en ce *que*** le dispositif de dégazage (40) comprend un réservoir intermédiaire (43) qui part de la conduite de mesure (30) entre l'ouverture d'entrée (31) et le dispositif (20) de mesure du débit, en particulier dans une zone de canalisation de la conduite de mesure (30), et
- **en ce qu'**entre l'ouverture d'entrée (31) et le dispositif (20) de mesure du débit, un volume de liquide est prélevé depuis la conduite de mesure (30) et envoyé dans le réservoir intermédiaire (43) à des fins de dégazage, et
- **en ce que** le volume de liquide prélevé est ensuite renvoyé dans la conduite de mesure (30) depuis le réservoir intermédiaire (43) entre l'ouverture d'entrée (31) et le dispositif (20) de mesure du débit.

4. Procédé selon la revendication 3, ***caractérisé en ce que*** le réservoir intermédiaire (43) comprend une conduite (44) de réservoir sur laquelle, de manière préférée, est prévu un récipient de stockage (9).

5. Procédé selon l'une quelconque des revendications 3 ou 4, ***caractérisé en ce que***, pour prélever le volume de liquide depuis la conduite de mesure (30), une dépression est produite sur le réservoir intermédiaire (43).

6. Procédé selon l'une quelconque des revendications 3 à 5,
***caractérisé***
***en ce que*** pour réintroduire le volume de liquide dans la conduite de mesure (30), un gaz est introduit dans le réservoir intermédiaire (43), et/ou
***en ce que*** pour réintroduire le volume de liquide dans la conduite de mesure (30), une pompe (18) placée sur la conduite de mesure (30) est actionnée.

7. Procédé selon l'une quelconque des revendications 3 à 6, ***caractérisé en ce que*** le réservoir intermédiaire (43) est fermé au moyen d'une vanne (6) placée sur le réservoir intermédiaire (43) lorsque le niveau dans le réservoir intermédiaire (43) tombe au dessous d'une valeur déterminée lors de la réintroduction du volume de liquide.

8. Procédé selon l'une quelconque des revendications 3 à 7,
***caractérisé***
***en ce que*** lors du prélèvement du volume de liquide depuis la conduite de mesure (30), une liaison fluidique entre le réservoir intermédiaire (43) et le dispositif (20) de mesure du débit est fermée, et/ou
***en ce que**,* lors de la réintroduction du volume de liquide dans la conduite de mesure (30), une liaison fluidique entre l'ouverture d'entrée (31) et le réservoir intermédiaire (43) est fermée.

9. Procédé selon l'une quelconque des revendications 3 à 8, ***caractérisé en* ce *que***, lors de la réintroduction du volume de liquide dans la conduite de mesure (30), une section d'écoulement de la conduite de mesure (30) est réduite, en particulier par une vanne (22) placée en aval du dispositif (20) de mesure du débit.

10. Procédé selon l'une quelconque des revendications précédentes, ***caractérisé en ce qu'***une pression est mesurée dans la conduite de mesure (30) et ***en ce que*** la pompe (18) placée sur la conduite de mesure (30) est commandée en fonction de la pression mesurée.

11. Procédé selon l'une quelconque des revendications précédentes,
***caractérisé***
***en ce qu'***une proportion de gaz dans le liquide présent dans la conduite de mesure est déterminée, et
***en ce que*** la proportion de gaz mesurée est utilisée pour compenser des valeurs de mesure du dispositif (20) de mesure du débit.

12. Procédé selon l'une quelconque des revendications précédentes,
***caractérisé***
***en ce qu'***une proportion de gaz dans le liquide présent dans la conduite de mesure (30) est déterminée et
***en ce que*** la pompe (18) placée sur la conduite de mesure (30) est commandée en fonction de la proportion de gaz mesurée.

13. Dispositif de détermination de quantité lors du transfert d'un liquide, en particulier pour appliquer le procédé selon l'une quelconque des revendications précédentes, avec
- une conduite de mesure (30) qui comporte à sa première extrémité une ouverture d'entrée (31) et à son autre extrémité une ouverture de sortie (32) pour le liquide, et
- un dispositif (20) de mesure du débit associé à la conduite de mesure (30) pour mesurer le débit de liquide circulant à travers la conduite de mesure (30),
***caractérisé***
- ***en ce qu'***un réservoir intermédiaire (43) est prévu, qui part de la conduite de mesure (30) entre l'ouverture d'entrée (31) et le dispositif (20) de mesure du débit, en particulier dans une zone de canalisation de la conduite de mesure (30), et
- ***en ce qu'***un dispositif (15) est prévu pour produire une dépression dans le réservoir intermédiaire (43), au moyen duquel un volume de liquide peut être transféré vers le réservoir intermédiaire (43) depuis la conduite de mesure (30).

14. Dispositif selon la revendication 13, ***caractérisé en ce que***, sur le réservoir intermédiaire (43), est prévu un dispositif de ventilation (14) au moyen duquel un gaz peut être introduit dans le réservoir intermédiaire (43) pour réintroduire le volume de liquide dans la conduite de mesure (30) depuis le réservoir intermédiaire (43).

15. Dispositif selon l'une quelconque des revendications 13 à 14, ***caractérisé en ce que*** le réservoir intermédiaire (43) comprend une conduite (44) de réservoir sur laquelle, de manière préférée, est prévu un récipient de stockage (9).

16. Dispositif selon l'une quelconque des revendications 13 à 15,
***caractérisé***
***en ce que*** plusieurs dispositifs de ventilation (14, 14') sont placés le long du réservoir intermédiaire (43), et
*en ce qu*'une vanne de fermeture (6) est placée à chaque fois sur le réservoir intermédiaire entre les différents dispositifs de ventilation (14, 14').

17. Dispositif selon l'une quelconque des revendications 13 à 16, ***caractérisé* en ce qu'**au moins un capteur (10) de niveau est prévu sur le réservoir intermédiaire (43), en particulier sur le récipient de stockage (9).

18. Dispositif selon la revendication 17, ***caractérisé en ce qu'***entre le dispositif (15) de production de la dépression et le réservoir intermédiaire (43), est prévue une vanne (11) qui peut être actionnée en fonction du niveau de remplissage déterminé par le capteur (10) de niveau.

19. Dispositif selon l'une quelconque des revendications 13 à 18,
***caractérisé***
**en ce qu'**une pompe (18) est prévue sur la conduite de mesure (30), en particulier entre le départ (50) du réservoir intermédiaire (43) et l'ouverture de sortie (32), et
***en ce que*** sur la pompe (18) est prévue, de manière préférée, une conduite d'aération (60), qui débouche en particulier dans le réservoir intermédiaire (43).

20. Dispositif selon l'une quelconque des revendications 13 à 19, ***caractérisé en ce que*** la hauteur de la conduite de mesure (30) dans la zone située entre l'ouverture d'entrée (31) et le réservoir intermédiaire (43) diminue au moins par segments jusqu'au réservoir intermédiaire (43).

21. Dispositif selon l'une quelconque des revendications 13 à 20,
***caractérisé***
**en ce qu'**une citerne est placée sur la conduite de mesure (30) au niveau de l'ouverture de sortie (32), et
***en ce qu'***un dispositif de raccordement (72) pour un tuyau d'aspiration (2) est prévu sur la conduite de mesure (30) au niveau de l'ouverture d'entrée (31).

22. Dispositif selon l'une quelconque des revendications 13 à 21, ***caractérisé* en ce *que*** la conduite de mesure (30) est réalisée en forme de U, en particulier en forme de double U, du côté du réservoir intermédiaire (43) opposé à l'ouverture d'entrée (31).

23. Dispositif selon l'une quelconque des revendications 13 à 22, ***caractérisé en ce qu'***un dispositif de commande est prévu, qui est conçu pour appliquer le procédé selon l'une quelconque des revendications 1 à 12.
